# EUROPÄISCHE PATENTSCHRIFT

(11) **EP 2 123 142 B1**
(45) Veröffentlichungstag und Bekanntmachung des Hinweises auf die Patenterteilung: **08.02.2012**
(21) Anmeldenummer: 09006247.2
(22) Anmeldetag: 08.05.2009
(51) Int. Cl.: A01B 33/06, A01B 33/08

(54) **Kreiselegge**
Power harrow
Herse rotative

(30) Priorität: 20.05.2008 DE 102008024319
(43) Veröffentlichungstag der Anmeldung: 25.11.2009
(73) Patentinhaber: Amazonen-Werke H. Dreyer GmbH & Co. KG, 49205 Hasbergen (DE)
(72) Erfinder: Giesecke, Reinhard, 27798 Hude (DE)

(56) Entgegenhaltungen:
- EP-A- 1 754 404
- DE-A1- 2 624 523
- FR-A- 1 327 266
- GB-A- 1 547 718

## Beschreibung

Die Erfindung betrifft eine Kreiselegge gemäß des Oberbegriffes des Patentanspruches 1.

Eine derartige Kreiselegge ist beispielsweise durch die DE 101 46 571 A1 bekannt. Diese Kreiselegge weist einen langgestreckten Kastenbalken auf. In dem Kastenbalken sind die einzelnen Werkzeugkreisel gelagert. Dem Kastenbalken ist ein ein Getriebegehäuse aufweisendes Eingangsgetriebe zugeordnet. Das Eingangsgetriebe ist mit dem Kastenbalken verschraubt, hierdurch ist bei der Montage eine genaue Ausrichtung des Antriebsritzels zu den Stirnrädern, die in dem Kastenbalken gelagert sind, erforderlich.

Weitere Kreiseleggen sind beispielsweise durch die DE 34 48 546 C2 oder DE 26 24 523 A1 bekannt. Diese Kreiseleggen bestehen aus mehreren Hohlprofilabschnitten, die zu einem quer zur Arbeitsrichtung langgestreckten Kastenbalken miteinander verschraubt sind. Dem mittleren Profilabschnitt ist ein Eingangsgetriebe zugeordnet, das auf der Oberseite des Kastenbalkens angeflanscht ist. Eine von dem Eingangsgetriebe abgehende nach unten ragende Eingangswelle trägt ein Abtriebsrad, welches mit einem Antriebsrad des Stirnradgetriebes für die Werkzeugkreisel zusammenwirkt. Diese Ausgestaltung ist relativ aufwendig, weil ein separates Eingangstriebe auf einem der Hohlprofilabschnitte angeflanscht werden muss.

Der Erfindung liegt die Aufgabe zugrunde, die Ausgestaltung des Kastenbalkens und des Eingangsgetriebes, insbesondere auch die Zuordnung von Antriebsritzel und Stirnrad, wesentlich zu vereinfachen und zu verbessern.

Diese Aufgabe wird erfindungsgemäß durch die kennzeichnenden Merkmale des Anspruches 1 gelöst. Infolge dieser Maßnahmen ist das Eingangsgetriebe gleichzeitig Bestandteil eines Hohlprofilabschnittes, welche zusammengesetzt den Kastenbalken bilden. Durch die Ausgestaltung des Eingangsgetriebes als Hohlprofilabschnitt und der Anordnung zumindest einer ein Stirnrad tragenden Kreiselwelle und der das Antriebsritzel tragenden Abtriebswelle des Eingangsgetriebes in dem Eingangsgetriebe, welches einen Hohlprofilabschnitt des Kastenbalkens bildet, ergibt sich eine äußerst genaue Zuordnung von Antriebsritzel und Stirnrad zueinander, weil sie in einem gemeinsamen, eine Einheit bildenden Bauteil angeordnet sind und die Lagerungssitze von Abtriebswelle und Kreiselwelle bei der Herstellung in genauer Weise zueinander und aufeinander abgestimmt angeordnet werden können.

Durch die Ausgestaltung, dass das Eingangsgetriebe als Hohlprofilabschnitt des Kastenbalkens ausgestaltet ist, wird es in einfacher Weise erreicht, dass das Eingangsgetriebegehäuse den Mittelabschnitt des Kastenbalkens bildet.

In einer weiteren Vereinfachung und Vereinheitlichung der seitlichen an dem mittleren Hohlprofilabschnitt, der von dem Eingangsgetriebegehäuse gebildet wird, anschließenden Hohlprofilabschnitte, um symmetrische rechte und linke Hohlprofilabschnitte verwenden zu können, ist vorgesehen, dass in dem Eingangsgetriebegehäuse zwei Kreiselwellen miteinander kämmende Stirnräder gelagert sind.

Eine einfache Verbindung der einzelnen Hohlprofilabschnitte und des von dem Eingangsgetriebe gebildeten mittleren Hohlprofilabschnitt zu einem als Träger der Kreiselegge ausgebildeten Kastenbalken lässt sich in einfacher Weise dadurch schaffen, dass das Eingangsgetriebe mit den sich beidseitig seitlich anschließenden Hohlprofilabschnitten, in denen die Kreiselwellen gelagert sind, mittels einer Schweißverbindung verbunden ist.

In einfacher Weise lässt sich das Eingangsgetriebe dadurch erstellen, dass das Eingangsgetriebe als gegossener Getriebeblock ausgebildet ist.

Eine einfache Ausgestaltung des Antriebes der Kreiselegge lässt sich dadurch erreichen, dass die Abtriebswelle und die das mit dem Abtriebsritzel der Abtriebswelle kämmende Stirnrad tragende Kreiselwelle in dem einteilig ausgebildeten und einen Hohlprofilabschnitt des Kastenbalkens bildenden Getriebegehäuse des Eingangsgetriebes gelagert sind.

Weiter Einzelheiten der Erfindung sind der Beispielsbeschreibung und den Zeichnungen zu entnehmen.

Hierbei zeigen
- Fig. 1: den erfindungsgemäßen als Hohlprofilträger ausgebildeten Kastenbalken mit dem Eingangsgetriebe einer Kreiselegge in perspektivischer Darstellung in der Ansicht von schräg-vorne,

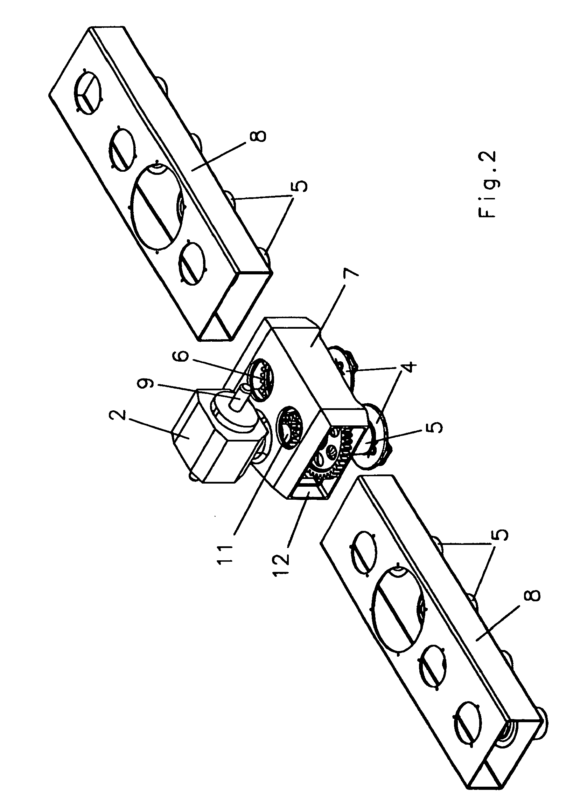

- Fig. 2: die einzelnen Hohlprofilabschnitte vor dem Zusammensetzen zu einem einzigen Kastenbalken in perspektivischer Darstellung gemäß Fig. 1,

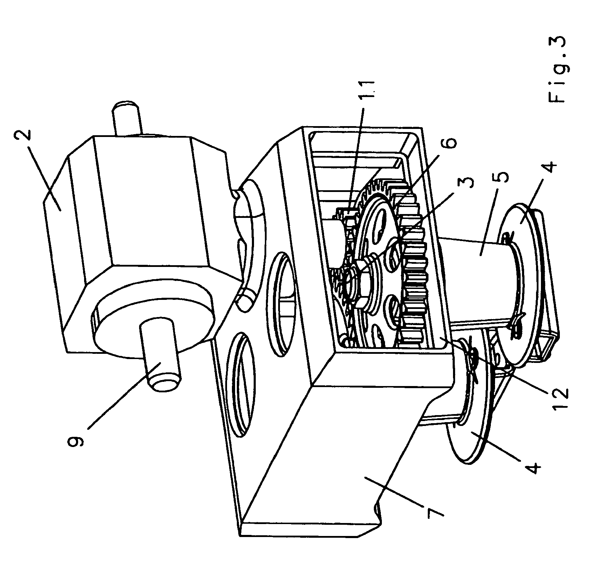

- Fig. 3: den Mittelabschnitt des Kastenbalkens mit Eingangsgetriebe in perspektivischer Darstellung von schräg-seitlich-vorn und oben und

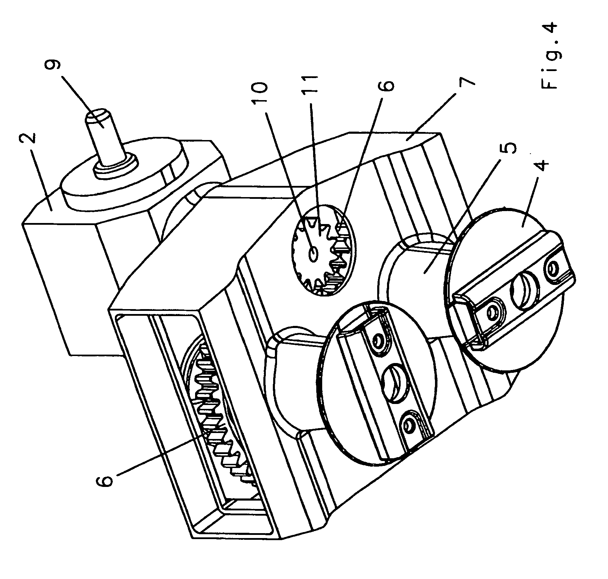

- Fig. 4: den Mittelabschnitt des Kastenbalkens mit Eingangsgetriebe in perspektivischer Darstellung von schräg-hinten-unten.

Die Kreiselegge weißt den Kastenbalken 1 mit dem Eingangsgetriebe 2 auf. Der Kastenbalken 1 ist als Getriebegehäuse für das in den Kastenbalken angeordnete Stirnradgetriebe zum Antrieb der mittels Lagerelementen in dem Kastenbalken 1 gelagerten Kreiselwellen 3 der Werkzeugkreisel 4 ausgebildet. Der einfachheithalber sind nur die beiden mittleren Werkzeugkreisel 4, an denen nicht dargestellte als Bodenbearbeitungswerkzeuge ausgebildete Zinken angeordnet sind, in den Lagerhülsen 5 mit den zugehörigen Stirnrädern 6 dargestellt. In den übrigen Lagerhülsen 5 des Kastenbalkens 1 sind ebenfalls Kreiselwellen mittels Lagerelementen gelagert. Diese Kreiselwellen 3 tragen auf ihrer Oberseite jeweils ein Stirnrad 6 und zwar in der Weise, dass die Stirnräder 6 benachbarter Kreiselwellen 3 miteinander kämmen. An den Werkzeugkreiseln sind in bekannter Weise entsprechende Zinken als Bodenbearbeitungswerkzeuge in nicht dargestellter Weise angeordnet. Der Kastenbalken 1 besteht aus drei Hohlprofilabschnitten, nämlich dem Mittelabschnitt 7 und dem linken und rechten Hohlprofilabschnitt 8.

In den einzelnen Abschnitten 7 und 8 sind Lagerhülsen 5 zur Anordnung von Lagerelementen zur Lagerung der Kreiselwellen 3 angeordnet.

Der Mittelabschnitt 7 trägt das Eingangsgetriebe 2. Der mittlere Hohlprofilabschnitt 7 und das Gehäuse des Eingangsgetriebes 2 sind als einteiliger Hohlprofilabschnitt des Kastenbalkens 1 ausgebildet. Das Eingangsgetriebe 2 mit dem Mittelabschnitt 7 ist als gegossener Getriebeblock ausgebildet.

In dem Gehäuseeingangsgetriebe 2 ist die in Fahrtrichtung weisende Antriebswelle 9 angeordnet. Die Antriebswelle 9 ist über ein Kegelradgetriebe kraftschlüssig mit der in dem Eingangsgetriebe 2 bzw. Hohlmittelabschnitt 7 gelagerten Abtriebswelle 10 des Eingangsgetriebes 2 verbunden. Die Abtriebswelle 10 des Eingangsgetriebes 2 trägt an ihrem unteren Ende ein Abtriebsritzel 11.

In den Lagerhülsen 5 des Mittelabschnittes 7 sind die Kreiselwellen 3 der beiden mittleren Werkzeugkreisel 4 gelagert. Diese Kreiselwellen 3 tragen auf ihrer Oberseite jeweils ein drehfest mit der jeweiligen Kreiselwelle 3 verbundenes Stirnrad 6. Die einzelnen Stirnräder 6 kämmen miteinander. Das Antriebsritzel 11 der Abtriebswelle 10 kämmt mit einem der Stirnräder 6.

In den beiden linken und rechten Hohlprofilabschnitten 8 sind ebenfalls Lagerhülsen 5 angeordnet, in denen die Kreiselwellen der Werkzeugkreisel auf ihrer Oberseite angeordnete und miteinander kämmende Stirnräder tragen angeordnet.

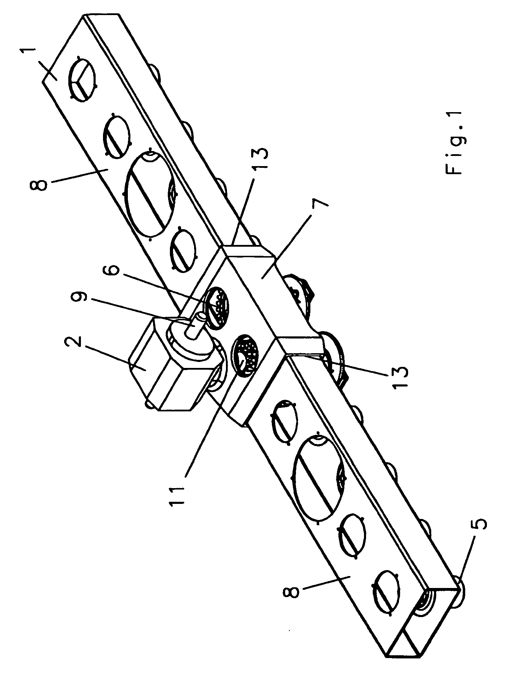

Der Mittelabschnitt 7 weist beidseitig Ausnehmungen 12 auf, die der Außenkontur der kastenförmigen seitlichen Hohlprofilabschnitte 8 entsprechen. In diese Ausnehmungen 12 werden die seitlichen Hohlprofilabschnitte 8 eingesetzt, wie Fig. 1 zeigt. Nach dem Einsetzen und Ausrichten der seitlichen Hohlprofilabschnitte 8 gegenüber dem Mittelabschnitt 7 werden die seitlichen Hohlprofilabschnitte 8 mit dem hohlprofilförmigen Mittelabschnitt 7 über eine Schweißverbindung 13 zu einem selbsttragenden als Kastenbalken 1 ausgebildeten Hohlprofilträger verbunden.

## Patentansprüche

1. Kreiselegge mit einem sich quer zur Arbeitsrichtung langgestreckten Kastenbalken, wobei in dem Kastenbalken beabstandet zueinander angeordnete Kreiselwellen (3) der Werkzeugkreisel (4) mittels Lagerelementen drehbar gelagert sind, wobei auf den Kreiselwellen (3) miteinander kämmende Stirnräder (6) drehfest angeordnet sind, so dass benachbarte Werkzeugkreisel gegensinnig rotierend antreibbar sind, wobei dem Kastenbalken ein mit einem Stirnrad (6) kämmendes Antriebsritzel (11), welches auf der Abtriebswelle (10) eines Eingangsgetriebes (2) angeordnet ist, aufweisendes und in einem Getriebegehäuse angeordnetes Eingangsgetriebe (2) zugeordnet ist, **dadurch gekennzeichnet, dass** in dem Eingangsgetriebe (2) zumindest eine ein Stirnrad (6) tragende Kreiselwelle (3) eines Werkzeugkreisels (4) und die das Antriebsritzel (11) tragende Abtriebswelle (10) des Eingangsgetriebes (2) drehbar gelagert sind, dass der Kastenbalken aus mehreren Hohlprofilabschnitten besteht, und dass das Eingangsgetriebegehäuse als Hohlprofilabschnitt (7) ausgebildet und Bestandteil des Kastenbalkens (1) ist.

2. Kreiselegge nach Anspruch 1, **dadurch gekennzeichnet, dass** das Eingangsgetriebegehäuse (2) den Mittelabschnitt (7) des Kastenbalkens (1) bildet.

3. Kreiselegge nach Anspruch 1, **dadurch gekennzeichnet, dass** in dem Eingangsgetriebegehäuse (7) zwei Kreiselwellen (3) miteinander kämmende Stirnräder (6) gelagert sind.

4. Kreiselegge nach einem oder mehreren der vorstehenden Ansprüche, **dadurch gekennzeichnet, dass** das Eingangsgetriebe (2, 7) mit den sich beidseitig seitlich anschließenden Hohlprofilabschnitten (8), in denen die Kreiselwellen gelagert sind, mittels einer Schweißverbindung (13) verbunden ist.

5. Kreiselegge nach einem oder mehreren der vorstehenden Ansprüche, **dadurch gekennzeichnet, dass** das Eingangsgetriebe (7) als gegossener Getriebeblock ausgebildet ist.

6. Kreiselegge nach einem oder mehreren der vorstehenden Ansprüche, **dadurch gekennzeichnet, dass** die Abtriebswelle (10) und die das mit dem Abtriebsritzel (11) der Abtriebswelle (10) kämmende Stirnrad (6) tragende Kreiselwelle (3) in dem einteilig ausgebildeten und einen Hohlprofilabschnitt (7) des Kastenbalkens (1) bildenden Getriebegehäuse des Eingangsgetriebes (2) gelagert sind.

## Claims

1. Rotary harrow having an elongate box bar that extends transversely to the working direction, wherein rotary shafts (3) of the rotary tool (4), which are arranged in the box bar in a manner spaced apart from one another, are mounted in a rotatable manner by means of bearing elements, wherein intermeshing spur gears (6) are arranged in a rotationally fixed manner on the rotary shafts (3) so that adjacent rotary tools are drivable in rotation in opposite directions, wherein the box bar is assigned an input transmission (2) which is arranged in a transmission housing and has a drive pinion (11) that meshes with a spur gear (6) and is arranged on the output shaft (10) of an input transmission (2), **characterized in that** at least one rotary shaft (3), carrying a spur gear (6), of a rotary tool (4) and the output shaft (10), carrying the drive pinion (11), of the input transmission (2) are mounted in a rotatable manner in the input transmission (2), **in that** the box bar consists of a plurality of hollow profile sections, and **in that** the input transmission housing is configured as a hollow profile section (7) and is a constituent part of the box bar (1).

2. Rotary harrow according to Claim 1, **characterized in that** the input transmission housing (2) forms the central section (7) of the box bar (1).

3. Rotary harrow according to Claim 1, **characterized in that** two rotary shafts (3) of intermeshing spur gears (6) are mounted in the input transmission housing (7).

4. Rotary harrow according to one or more of the preceding claims, **characterized in that** the input transmission (2, 7) is connected by means of a welded connection (13) to the hollow profile sections (8) which adjoin laterally on both sides and in which the rotary shafts are mounted.

5. Rotary harrow according to one or more of the preceding claims, **characterized in that** the input transmission (7) is configured as a cast transmission block.

6. Rotary harrow according to one or more of the preceding claims, **characterized in that** the output shaft (10) and the rotary shaft (3) carrying the spur gear (6) that meshes with the output pinion (11) of the output shaft (10) are mounted in the transmission housing of the input transmission (2), said transmission housing being configured in one piece and forming a hollow profile section (7) of the box bar (1).

## Revendications

1. Herse rotative comportant une poutre-caisson allongée transversalement à la direction de travail,
- la poutre-caisson comportant des arbres (3) des outils de herse (4), arbres écartés les uns des autres et montés à rotation dans des éléments de palier,
- les arbres (3) étant solidaires de pignons droits (6) engrenant les uns dans les autres de façon que deux outils de herse, voisins, soient entraînés en rotation en sens opposé,
- la poutre-caisson comportant un pignon d'entraînement (11) en prise avec un pignon droit (6), ce pignon d'entraînement étant porté par l'arbre de sortie (10) d'une transmission d'entrée (2), logé dans le boîtier de la transmission d'entrée (2),
herse rotative **caractérisée en ce que**
- la transmission d'entrée (2) reçoit à rotation au moins un arbre (3) portant un pignon droit (6) d'un élément de herse (4) et l'arbre de sortie (10) de la transmission d'entrée (2) porte le pignon d'entraînement (11),
- la poutre-caisson est composée de plusieurs segments de profilé creux, et
- le boîtier de la transmission d'entrée est réalisé sous la forme d'un segment de profilé creux (7) et fait partie de la poutre-caisson (1).

2. Herse rotative selon la revendication 1,
**caractérisée en ce que**
le boîtier de transmission d'entrée (7) forme le segment médian (7) de la poutre-caisson (1).

3. Herse rotative selon la revendication 1,
**caractérisée en ce que**
le boîtier de transmission d'entrée (7) comporte deux arbres (3) avec des pignons droits (6) engrenés.

4. Herse rotative selon une ou plusieurs des revendications précédentes,
**caractérisée en ce que**
la transmission d'entrée (2, 7) est reliée aux segments de profilé creux (8), adjacents des deux côtés, dans lesquels sont logés les arbres de herse, la réunion étant faite par une liaison soudée (13).

5. Herse rotative selon une ou plusieurs des revendications précédentes,
**caractérisée en ce que**
le boîtier de transmission d'entrée (7) est un bloc de fonte.

6. Herse rotative selon une ou plusieurs des revendications précédentes,
**caractérisée en ce que**
l'arbre de sortie (10) et l'arbre (3) portant le pignon droit (6) engrenant avec le pignon de sortie (11) de l'arbre de sortie (10) sont montés dans le boîtier de la transmission d'entrée (2), boîtier réalisé en une seule pièce et formé par un segment de profilé creux (7) de la poutre-caisson (1).
